# EUROPEAN PATENT SPECIFICATION

(11) **EP 3 300 875 B1**
(45) Date of publication and mention of the grant of the patent: **31.07.2019**
(21) Application number: 17193487.0
(22) Date of filing: 27.09.2017
(51) Int. Cl.: B29C 64/165, B33Y 10/00, B33Y 50/02, B29C 64/393, B33Y 30/00, B22F 1/00, B28B 1/00

(54) **THREE-DIMENSIONALLY FORMED OBJECT MANUFACTURING APPARATUS AND METHOD OF MANUFACTURING THREE-DIMENSIONALLY FORMED OBJECT**
VORRICHTUNG ZUR HERSTELLUNG EINES DREIDIMENSIONAL GEFORMTEN OBJEKTS UND VERFAHREN ZUR HERSTELLUNG EINES DREIDIMENSIONAL GEFORMTEN OBJEKTS
APPAREIL DE FABRICATION D'OBJETS FORMÉS EN TROIS DIMENSIONS ET PROCÉDÉ DE FABRICATION D'UN OBJET FORMÉ EN TROIS DIMENSIONS

(30) Priority: 29.09.2016 JP 2016191570
(43) Date of publication of application: 04.04.2018
(73) Proprietor: Seiko Epson Corporation, Tokyo 160-8801 (JP)
(72) Inventor: TSUNOYA, Akihiko, Suwa-shi, Nagano 392-8502 (JP)
(74) Representative: Miller Sturt Kenyon

(56) References cited:
- WO-A1-2015/056230
- CA-A1- 2 950 890

## Description

### BACKGROUND

### 1. Technical Field

The present invention relates to a three-dimensionally formed object manufacturing apparatus and a method of manufacturing a three-dimensionally formed object.

### 2. Related Art

In the related art, a three-dimensionally formed object manufacturing apparatus and a method of manufacturing a three-dimensionally formed object are used, in which the three-dimensionally formed object is manufactured by ejecting a fluid material.

For example, JP-A-2008-279418 discloses a method of manufacturing a three-dimensionally formed object, the method including ejecting (jetting) a paste as a fluid material through nozzles.

In a case where a fluid material is ejected to manufacture a three-dimensionally formed object, when the fluid material is laminated on a lower layer, the lower layer spreads horizontally due to the weight of the layer formed of the fluid material formed above the lower layer, and the laminate of the fluid material is deformed. As a result, the accuracy (quality) of the three-dimensionally formed object may deteriorate. However, recently, the accuracy (quality) required to manufacture a three-dimensionally formed object is increased. Therefore, the users require that a three-dimensionally formed object be manufactured with higher accuracy than that in the method of manufacturing a three-dimensionally formed object of the related art disclosed in JP-A-2008-279418.

WO 2015/056230 discloses a 3D (three-dimensional) ink-jet printing apparatus and method which includes techniques for evaporating a carrier liquid during printing while at least a portion of dispersant remains in the printed layer; evaporating dispersant in a first layer prior to sintering the first layer and/or prior to printing a second layer; leveling an upper-layer of a printed object using a horizontal roller; and printing layers of an object, each layer with both object and support portions, resulting in an object with support, in particular, support for negative angles and molds.

### SUMMARY

An advantage of some aspects of the invention is to suppress, when a fluid material constituting a three-dimensionally formed object is laminated, deformation of a laminate of the fluid material.

According to a first aspect of the invention, there is provided a three-dimensionally formed object manufacturing apparatus including: an ejecting portion that ejects a fluid material including particles, which form a constituent material of a three-dimensionally formed object, and a solvent; a stage on which a layer formed of the fluid material, which is ejected from the ejecting portion, is laminated; an obtaining portion that obtains an image of the layer formed of the fluid material formed on the stage; a drying portion that volatilizes the solvent included in the fluid material of the stage; and a determination portion that determines whether or not a predetermined amount or more of the solvent is volatilized based on the image obtained by the obtaining portion, in which a next layer formed of the fluid material is laminated after the determination portion determines that the predetermined amount or more of the solvent is volatilized per formation of a predetermined layer in a laminating direction of the layer formed of the fluid material. This includes determining that even if the solvent has not yet been sufficiently volatilized, it will be by the time the next layer is ejected (at least in a particular portion of the earlier layer).

According to the aspect, the three-dimensional structure formed object manufacturing apparatus includes: an obtaining portion that obtains an image of the layer formed of the fluid material formed on the stage; and a determination portion that determines whether or not a predetermined amount or more of the solvent is volatilized based on the image obtained by the obtaining portion, in which a next layer formed of the fluid material is laminated after the determination portion determines that the predetermined amount or more of the solvent is volatilized per formation of a predetermined layer in a laminating direction of the layer formed of the fluid material. In general, the color of the fluid material constituting the three-dimensionally formed object changes during drying. Therefore, for example, whether or not the predetermined amount or more of the solvent is volatilized can be determined based on a change in the color of the image per formation of the predetermined layer. Therefore, when the layers of the fluid material are laminated, a lower layer is dried and thus can be prevented from horizontally spreading. Therefore, when the fluid material constituting a three-dimensionally formed object is laminated, deformation of the laminate of the fluid material can be suppressed.

The meaning of "per formation of a predetermined layer" includes not only formation of one layer but also formation of plural layers. In addition, the meaning of "change in color" includes not only a change in hue but also a change in brightness.

According to a second aspect of the invention, the three-dimensionally formed object manufacturing apparatus according to the first aspect further includes a storage portion that stores a corresponding parameter between a volatilization rate of the solvent and a viscosity of the fluid material, in which the determination portion determines whether or not the predetermined amount or more of the solvent is volatilized based on a volatilization rate corresponding to a predetermined viscosity of the fluid material which is calculated using the corresponding parameter.

According to the aspect, the determination portion determines whether or not the predetermined amount or more of the solvent is volatilized based on a volatilization rate corresponding to a predetermined viscosity of the fluid material which is calculated using the corresponding parameter. Here, the accuracy (for example, regarding deformation of the laminate of the fluid material caused when the lower layer horizontally spreads due to the weight of the fluid material) required during the manufacturing of a three-dimensionally formed object has a high correlation with the viscosity of the fluid material. Therefore, when the fluid material constituting a three-dimensionally formed object is laminated, deformation of the laminate of the fluid material can be more effectively suppressed.

According to a third aspect of the invention, in the three-dimensionally formed object manufacturing apparatus according to the first or second aspect, the drying portion includes at least one of a heating portion or a blowing portion.

According to the aspect, the drying portion includes at least one of a heating portion or a blowing portion. As a result, the drying portion can be simply configured.

According to a fourth aspect of the invention, in the three-dimensionally formed object manufacturing apparatus according to any one of the first to third aspects, an output of the drying portion is variable depending on the volatilization rate of the solvent.

According to the aspect, an output of the drying portion is variable depending on the volatilization rate of the solvent. Therefore, based on, for example, whether or not the solvent is easily volatilized or the size of a three-dimensionally formed object to be manufactured, the degree of dryness can be adjusted depending on whether the volatilization rate of the solvent is high or low.

According to a fifth aspect of the invention, in the three-dimensionally formed object manufacturing apparatus according to the fourth aspect, the output of the drying portion is partially variable depending on a volatilization rate of the solvent in a part of the layer formed of the fluid material based on the image obtained by the obtaining portion.

According to the aspect, the output of the drying portion is partially variable depending on a volatilization rate of the solvent in a part of the layer formed of the fluid material based on the image obtained by the obtaining portion. Therefore, the output can be adjusted to be higher in a portion where the volatilization rate of the solvent is low than a portion where the volatilization rate of the solvent is high based on the image obtained by the obtaining portion. That is, there is no partial unevenness in volatilization rate in the layer formed of the fluid material formed on the stage.

According to a sixth aspect of the invention, in the three-dimensionally formed object manufacturing apparatus according to any one of the first to fifth aspects, the determination portion determines whether or not the predetermined amount or more of the solvent is volatilized based on a change in a color of the image obtained by the obtaining portion.

According to the aspect, whether or not the predetermined amount or more of the solvent is volatilized is determined based on a change in the color of the image. As a result, when the fluid material constituting a three-dimensionally formed object is laminated, deformation of the laminate of the fluid material can be suppressed.

According to a seventh aspect of the invention, there is provided a method of manufacturing a three-dimensionally formed object by laminating layers, the method including: ejecting a layer formed of a fluid material including particles, which form a constituent material of a three-dimensionally formed object, and a solvent to a stage until a predetermined layer is formed in a laminating direction of the layer formed of the fluid material; volatilizing the solvent included in the fluid material of the stage; obtaining an image of the layer formed of the fluid material formed on the stage; determining whether or not a predetermined amount or more of the solvent is volatilized based on the obtained image; and laminating a next layer formed of the fluid material after it is determined that the predetermined amount or more of the solvent is volatilized per formation of the predetermined layer.

According to the aspect, an image of the layer formed of the fluid material formed on the stage is obtained per formation of the predetermined layer in the laminating direction of the layer formed of the fluid material, and then whether or not the predetermined amount or more of the solvent is volatilized is determined based on the obtained image. After the determination portion determines that the predetermined amount or more of the solvent is volatilized, a next layer formed of the fluid material can be newly laminated. Therefore, when the layers of the fluid material are laminated, a lower layer is dried and thus can be prevented from horizontally spreading. Therefore, when the fluid material constituting a three-dimensionally formed object is laminated, deformation of the laminate of the fluid material can be suppressed.

### BRIEF DESCRIPTION OF THE DRAWINGS

Embodiments of the invention will now be described by way of example only with reference to the accompanying drawings, wherein like numbers reference like elements.
Fig. 1 is a diagram showing a schematic configuration of a three-dimensionally formed object manufacturing apparatus according to an embodiment of the invention.
Fig. 2 is an enlarged view showing a II portion shown in Fig. 1.
Fig. 3 is a diagram showing a schematic configuration of the three-dimensionally formed object manufacturing apparatus according to the embodiment of the invention.
Fig. 4 is an enlarged view showing a IV portion shown in Fig. 3.
Fig. 5 is a perspective view schematically showing a head base according to the embodiment of the invention.
Fig. 6 is a plan view schematically showing a relationship between a disposition of head units according to the embodiment of the invention and a formed state of a three-dimensionally formed object.
Fig. 7 is a plan view schematically showing the relationship between the disposition of head units according to the embodiment of the invention and the formed state of the three-dimensionally formed object.
Fig. 8 is a plan view schematically showing the relationship between the disposition of head units according to the embodiment of the invention and the formed state of the three-dimensionally formed object.
Fig. 9 is a diagram schematically showing the formed state of the three-dimensionally formed object.
Fig. 10 is a diagram schematically showing the formed state of the three-dimensionally formed object.
Fig. 11 is a diagram schematically showing another disposition example of the head units disposed on the head base.
Fig. 12 is a diagram schematically showing another disposition example of the head units disposed on the head base.
Fig. 13 is a diagram schematically showing an example of manufacturing three-dimensionally formed objects using the three-dimensionally formed object manufacturing apparatus according to the embodiment of the invention.
Fig. 14 is a flowchart showing a method of manufacturing a three-dimensionally formed object according to an example of the invention.
Fig. 15 is a diagram schematically showing an example of manufacturing three-dimensionally formed objects using a three-dimensionally formed object manufacturing apparatus of the related art.

### DESCRIPTION OF EXEMPLARY EMBODIMENTS

Hereinafter, embodiments of the invention will be described with reference to the drawings.

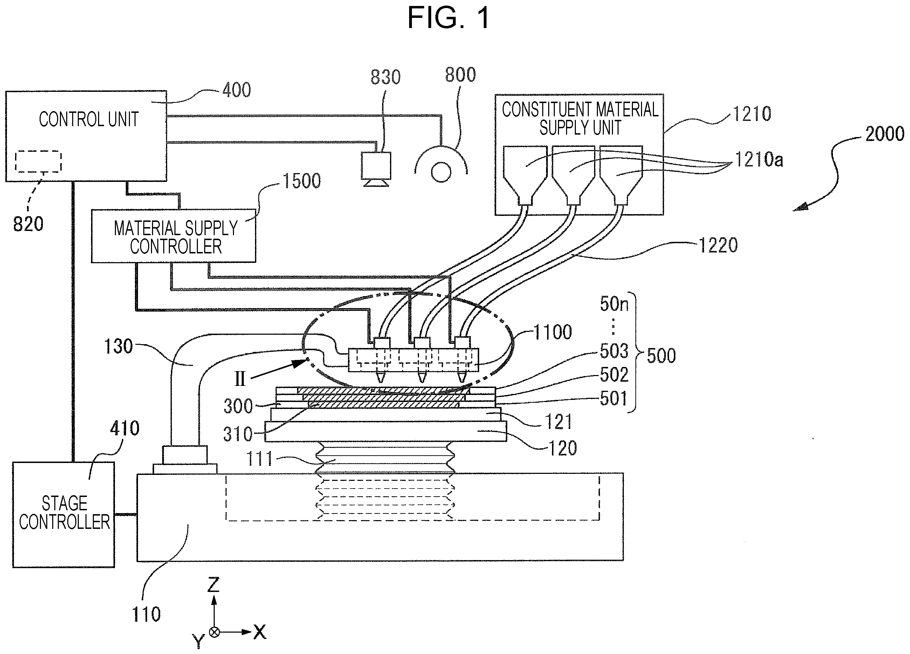

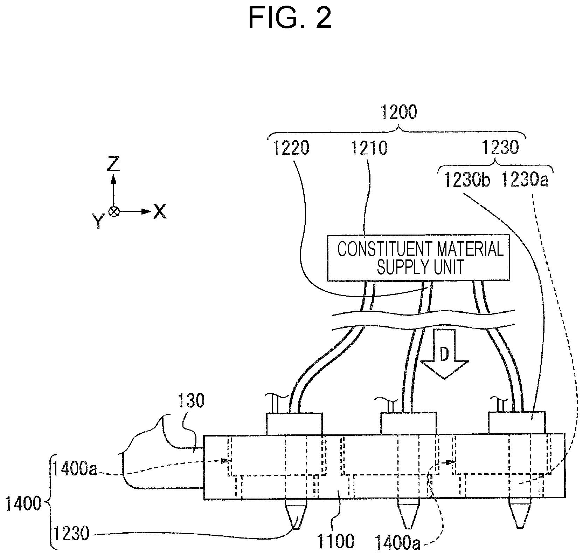

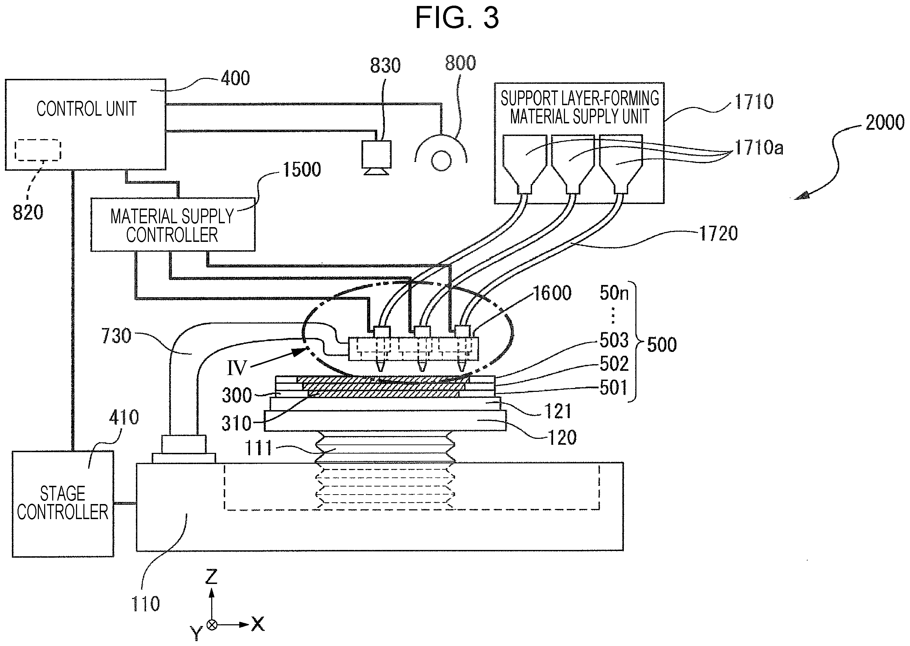

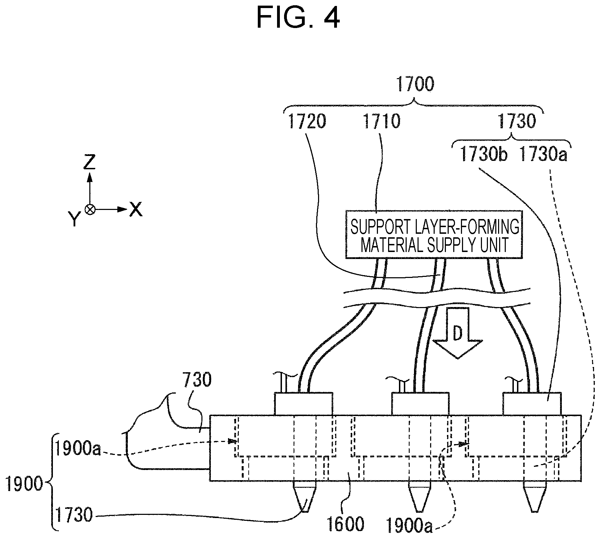

Figs. 1 to 4 are diagrams showing a schematic configuration of a three-dimensionally formed object manufacturing apparatus according to an embodiment of the invention. Fig. 2 is an enlarged view showing a II portion shown in Fig. 1. Fig. 4 is an enlarged view showing a IV portion shown in Fig. 3.

Here, the three-dimensionally formed object manufacturing apparatus according to the embodiment includes two kinds of material supply portions (head bases). Among these, Figs. 1 and 2 show one material supply portion (a material supply portion that supplies a constituent material (a fluid material including powder particles, which form a three-dimensionally formed object, a solvent, and a binder)). Figs. 3 and 4 show the other material supply portion (a material supply portion that supplies a fluid support layer-forming material for forming a support layer which supports a three-dimensionally formed object during the formation of the three-dimensionally formed object)).

"Three-dimensional forming" described in this specification represents forming a so-called three-dimensionally formed object which also includes a planar formed object, that is, a so-called two-dimensionally formed object having a thickness. In addition, the meaning of "support" includes supporting something from below or the side and, in some cases, also includes supporting something from above.

In addition, when a constituent layer formed of a three-dimensionally formed object is formed using a constituent material of the three-dimensionally formed object, the three-dimensionally formed object manufacturing apparatus according to the embodiment can form a support layer for supporting the constituent layer. Therefore, the constituent layer can be formed without deformation of a portion (a so-called overhang portion) which is formed to be convex in a laminating direction (Z direction). However, the invention is not limited to the above-described configuration, and a configuration in which the support layer is not formed (that is, the support layer-forming material is not used) may be adopted.

A three-dimensionally formed object manufacturing apparatus 2000 (hereinafter, referred to as "forming apparatus 2000") shown in Figs. 1 to 4 includes: a base 110; a stage 120 that is provided so as to move in X, Y, and Z directions shown in the drawing or to be driven in a rotating direction around a Z axis by a driving device 111 as a driving unit which is included in the base 110.

As shown in Figs. 1 and 2, the three-dimensionally formed object manufacturing apparatus 2000 includes a head base support portion 130. The base 110 is fixed to one end portion of the head base support portion 130. A head base 1100 in which plural head units 1400 are held is fixed to the other end portion of the head base support portion 130, in which each of the head units 1400 includes a constituent material ejecting portion 1230 that ejects the constituent material.

In addition, as shown in Figs. 3 and 4, the three-dimensionally formed object manufacturing apparatus 2000 includes a head base support portion 730. The base 110 is fixed to one end portion of the head base support portion 730. A head base 1600 in which plural head units 1900 are held is fixed to the other end portion of the head base support portion 730, in which each of the head units 1900 includes a support layer-forming material ejecting portion 1730 that ejects the support layer-forming material for supporting a three-dimensionally formed object.

Here, the head base 1100 and the head base 1600 are provided in parallel on an XY plane.

The constituent material ejecting portion 1230 and the support layer-forming material ejecting portion 1730 have the same configuration. However, the invention is not limited to the above-described configuration.

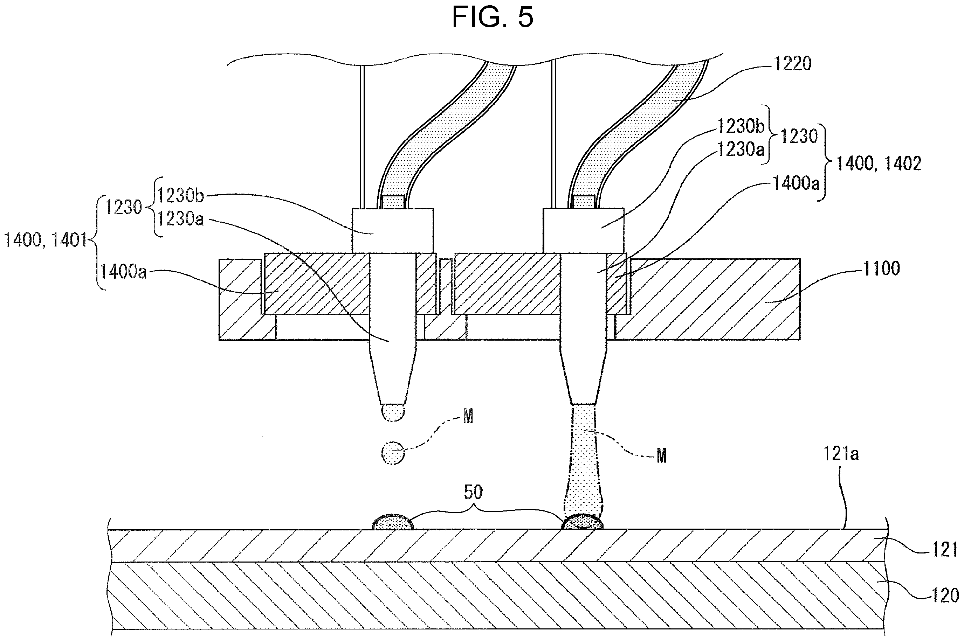

A forming stage 121 is detachably disposed on the stage 120. In the process of forming a laminate 500 of three-dimensionally formed objects, layers 501, 502, and 503 are formed on a forming surface 121a (refer to Fig. 5) of the forming stage 121. The laminate 500 of three-dimensionally formed objects, which is formed on the forming surface 121a of the forming stage 121 in the forming apparatus 2000, is imparted with energy such as heat energy so as to be degreased (at least a part of the solvent or the binder included in the constituent material is decomposed and removed) or sintered. The laminate 500 of three-dimensionally formed objects is degreased or sintered by setting the forming stage 121 in a thermostatic chamber which is provided separately from the forming apparatus 2000 and can impart heat energy (not shown). Therefore, it is required that the forming stage 121 has high heat resistance. As the forming stage 121, for example, a ceramic plate is used. As a result, high heat resistance can be obtained, the reactivity between the forming stage 121 and the constituent material of a three-dimensionally formed object to be sintered (or to be melted) is low, and the deterioration of the laminate 500 of three-dimensionally formed objects can be prevented. In Figs. 1 and 3, for convenience of description, a three-layer structure including the layers 501, 502, and 503 is adopted. However, layers (in Figs. 1 and 3, up to a layer 50n) are laminated until the laminate 500 of three-dimensionally formed objects has a desired shape.

Here, each of the layers 501, 502, 503, and 50n includes: a support layer 300 that is formed of the support layer-forming material ejected from the support layer-forming material ejecting portion 1730; and a constituent layer 310 that is formed of the constituent material ejected from the constituent material ejecting portion 1230.

In addition, separately from decreasing or sintering, the forming apparatus 2000 according to the embodiment includes an infrared heater 800 as a drying portion that promotes the volatilization of the solvent included in the constituent material. The control of the infrared heater 800 will be described below. A configuration of the drying portion is not particularly limited. In addition to the configuration of imparting heat energy such as the infrared heater 800, a blowing portion such as a fan may be provided.

Further, the forming apparatus 2000 according to the embodiment includes a camera 830 as an obtaining portion that obtains an image of the laminate 500 of three-dimensionally formed objects (layers 501, 502, 503, ..., and 50n) formed on the stage 120 (forming stage 121). The camera 830 can obtain (take) an image of the entire area of the stage 120 and can accurately detect a partial change in the color of a layer formed of a fluid material M formed on the stage 120.

Fig. 2 is an enlarged view showing a II portion which shows the head base 1100 shown in Fig. 1. As shown in Fig. 2, the head base 1100 holds the plural head units 1400. Although described below in detail, one head unit 1400 is formed by the constituent material ejecting portion 1230, which is included in a constituent material supply device 1200, being held by a holding jig 1400a. The constituent material ejecting portion 1230 includes: an ejection nozzle 1230a; and an ejection driving portion 1230b that is controlled by a material supply controller 1500 to eject the constituent material through the ejection nozzle 1230a.

Fig. 4 is an enlarged view showing a IV portion which shows the head base 1600 shown in Fig. 3. Here, the head base 1600 has the same configuration as the head base 1100. Specifically, as shown in Fig. 4, the head base 1600 holds the plural head units 1900. One head unit 1900 is formed by the support layer-forming material ejecting portion 1730, which is included in a support layer-forming material supply device 1700, being held by a holding jig 1900a. The support layer-forming material ejecting portion 1730 includes: an ejection nozzle 1730a; and an ejection driving portion 1730b that is controlled by the material supply controller 1500 to eject the support layer-forming material through the ejection nozzle 1730a.

As shown in Fig. 1, the constituent material ejecting portion 1230 is connected to a constituent material supply unit 1210 through a supply tube 1220, the constituent material supply unit 1210 accommodating the constituent material and corresponding to each of the head units 1400 which are held in the head base 1100. A predetermined constituent material is supplied from the constituent material supply unit 1210 to the constituent material ejecting portion 1230. The constituent material supply unit 1210 includes constituent material accommodating portions 1210a, and the constituent material of the laminate 500 of three-dimensionally formed objects, which is formed using the forming apparatus 2000 according to the embodiment, is accommodated in the constituent material accommodating portions 1210a. Each of the constituent material accommodating portions 1210a is connected to one, some or all of the constituent material ejecting portions 1230 through the supply tube 1220. In this way, by including each of the constituent material accommodating portions 1210a, the constituent material supply unit 1210 can supply different kinds of materials through the head base 1100.

As shown in Fig. 3, the support layer-forming material ejecting portion 1730 is connected to a support layer-forming material supply unit 1710 through a supply tube 1720, the support layer-forming material supply unit 1710 accommodating the support layer-forming material and corresponding to each of the head units 1900 which are held in the head base 1600. A predetermined support layer-forming material is supplied from the support layer-forming material supply unit 1710 to the support layer-forming material ejecting portion 1730. The support layer-forming material supply unit 1710 includes support layer-forming material accommodating portions 1710a, and the support layer-forming material which forms the support layer during the formation of the laminate 500 of three-dimensionally formed objects is accommodated in the support layer-forming material accommodating portions 1710a. Each of the support layer-forming material accommodating portions 1710a is connected to one, some or all of the support layer-forming material ejecting portions 1730 through the supply tube 1720. This way, by including each of the support layer-forming material accommodating portions 1710a, the support layer-forming material supply unit 1710 can supply different kinds of support layer-forming materials through the head base 1600.

As the constituent material and the support layer-forming material, for example, a slurry-like (or paste-like) mixed material including a powder such as a single powder, an alloy powder, or a mixed powder, a solvent, and a binder can be used, the single powder being powder of magnesium (Mg), iron (Fe), cobalt (Co), chromium (Cr), aluminum (Al), titanium (Ti), copper (Cu), or nickel (Ni), the alloy powder being powder including one or more of the above-described metals (maraging steel, stainless steel, cobalt-chromium-molybdenum, titanium alloys, nickel alloys, aluminum alloys, cobalt alloys, cobalt-chromium alloys), and the mixed powder being a combination of two or more kinds selected from the above-described single powders and the above-described mixed powders.

In addition, a general engineering plastic such as polyamide, polyacetal, polycarbonate, modified polyphenylene ether, polybutylene terephthalate, or polyethylene terephthalate can be used. Further, an engineering plastic such as polysulfone, polyether sulfone, polyphenylene sulfide, polyarylate, polyimide, polyamide imide, polyether imide, or polyether ether ketone can be used.

This way, as the constituent material and the support layer-forming material, for example, a metal other than the above-described metals, a ceramic, or a resin can be used without any particular limitation. In addition, for example, silicon dioxide, titanium dioxide, aluminum oxide, or zirconium oxide can also be preferably used.

Examples of the solvent include: water; (poly)alkylene glycol monoalkyl ethers such as ethylene glycol monomethyl ether, ethylene glycol monoethyl ether, propylene glycol monomethyl ether, or propylene glycol monoethyl ether; acetates such as ethyl acetate, n-propyl acetate, isopropyl acetate, n-butyl acetate, or isobutyl acetate; aromatic hydrocarbons such as benzene, toluene, or xylene; ketones such as methyl ethyl ketone, acetone, methyl isobutyl ketone, ethyl-n-butyl ketone, diisopropyl ketone, or acetyl acetone; alcohols such as ethanol, propanol, or butanol; tetraalkylammonium acetates; sulfoxide solvents such as dimethyl sulfoxide or diethyl sulfoxide; pyridine solvents such as pyridine, γ-picoline, or 2,6-lutidine; and ionic liquids of tetraalkylammonium acetates (for example, tetrabutylammonium acetate). One kind or a combination of two or more kinds selected from the above examples can be used.

Examples of the binder include: synthetic resins such as an acrylic resin, an epoxy resin, a silicone resin, or a cellulose resin; and thermoplastic resins such as polylactic acid (PLA), polyamide (PA), or polyphenylene sulfide (PPS). In addition, an ultraviolet curable resin which is polymerizable by ultraviolet irradiation may be used.

The forming apparatus 2000 includes a control unit 400 which controls the stage 120, the constituent material ejecting portions 1230 included in the constituent material supply device 1200, and the support layer-forming material ejecting portions 1730 included in the support layer-forming material supply device 1700 based on data for forming a three-dimensionally formed object which is output from a data output device (not shown) such as a personal computer. The control unit 400 controls the stage 120 and the constituent material ejecting portion 1230 to be driven and operate in cooperation with each other and controls the stage 120 and the support layer-forming material ejecting portion 1730 to be driven and operate in cooperation with each other.

Regarding the stage 120 which is provided to be movable on the base 110, based on control signals output from the control unit 400, signals for controlling, for example, the moving start and stop, a moving direction, a moving amount, and a moving speed of the stage 120 are generated by a stage controller 410 and are transmitted to the driving device 111 included in the base 110 such that the stage 120 moves in the X, Y, and Z directions shown in the drawings. Regarding the constituent material ejecting portions 1230 included in the head units 1400, based on control signals output from the control unit 400, signals for controlling, for example, the amount of the material ejected through the ejection nozzles 1230a by the ejection driving portions 1230b included in the constituent material ejecting portions 1230 are generated by the material supply controller 1500, and a predetermined amount of the constituent material is ejected through the ejection nozzles 1230a based on the generated signals.

Likewise, regarding the support layer-forming material ejecting portions 1730 included in the head units 1900, based on control signals output from the control unit 400, signals for controlling, for example, the amount of the material ejected through the ejection nozzles 1730a by the ejection driving portions 1730b included in the support layer-forming material ejecting portions 1730 are generated by the material supply controller 1500, and a predetermined amount of the support layer-forming material is ejected through the ejection nozzles 1730a based on the generated signals.

Next, the head units 1400 will be described in more detail. The head unit 1900 has the same configuration as the head unit 1400. Therefore, the detailed configuration of the head unit 1900 will be described.

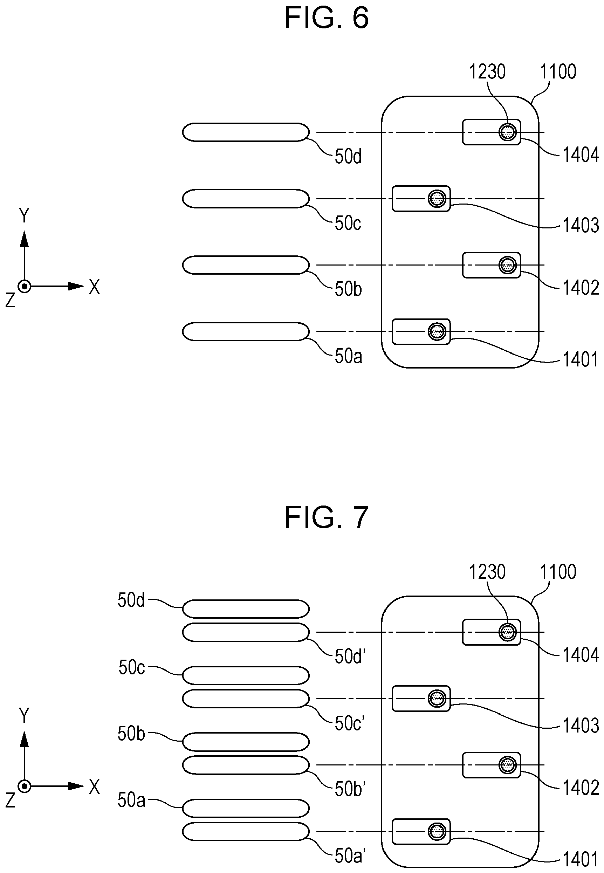

Fig. 5 and Figs. 6 to 8 show an example of a state where the head units 1400 and the constituent material ejecting portions 1230 are held in the head base 1100. Figs. 6 to 8 are diagrams showing the external appearance of the head base 1100 when seen from a direction D shown in Fig. 2.

As shown in Fig. 5, in the head base 1100, the plural head units 1400 are held by a fixing unit (not shown). In addition, as shown in Figs. 6 to 8, in the head base 1100 of the forming apparatus 2000 according to the embodiment, four head units 1400 including, from below in the drawing, a head unit 1401 on a first line, a head unit 1402 on a second line, a head unit 1403 on a third line, and a head unit 1404 on a fourth line are disposed in a zigzag shape (in an alternate manner). As shown in Fig. 6, while moving the stage 120 in the X direction relative to the head base 1100, the constituent material is ejected from the respective head units 1400 to form constituent layer-forming portions 50 (constituent layer-forming portions 50a, 50b, 50c, and 50d). The procedure of forming the constituent layer-forming portions 50 will be described below.

Although not shown in the drawing, the constituent material ejecting portions 1230 included in each of the head units 1401 to 1404 are connected to the constituent material supply unit 1210 through the ejection driving portions 1230b and the supply tubes 1220.

As shown in Fig. 5, the constituent material ejecting portions 1230 eject the fluid material M, which is the constituent material of a three-dimensionally formed object, to the forming surface 121a of the forming stage 121, which is mounted on the stage 120, through the ejection nozzles 1230a. The head unit 1401 ejects the fluid material M, for example, in the form of liquid drops, and the head unit 1402 ejects the fluid material M, for example, in the form of a continuous body. The fluid material M may be ejected in the form of liquid drops or in the form of a continuous body. In the following description of the embodiment, the fluid material M is ejected in the form of liquid drops.

The constituent material ejecting portion 1230 and the support layer-forming material ejecting portion 1730 are not limited to the above-described configuration and may be another type of material supply portion such as an extruder.

The fluid material M ejected through the ejection nozzles 1230a in the form of liquid drops flies substantially in the gravity direction and lands on the forming stage 121. The stage 120 moves such that the constituent layer-forming portions 50 are formed by the landed fluid material M. An aggregate of the constituent layer-forming portions 50 is formed as the constituent layer 310 (refer to Fig. 1) of the laminate 500 of three-dimensionally formed objects formed on the forming surface 121a of the forming stage 121.

Next, the procedure of forming the constituent layer-forming portions 50 will be described using Figs. 6 to 8, Fig. 9, and Fig. 10.

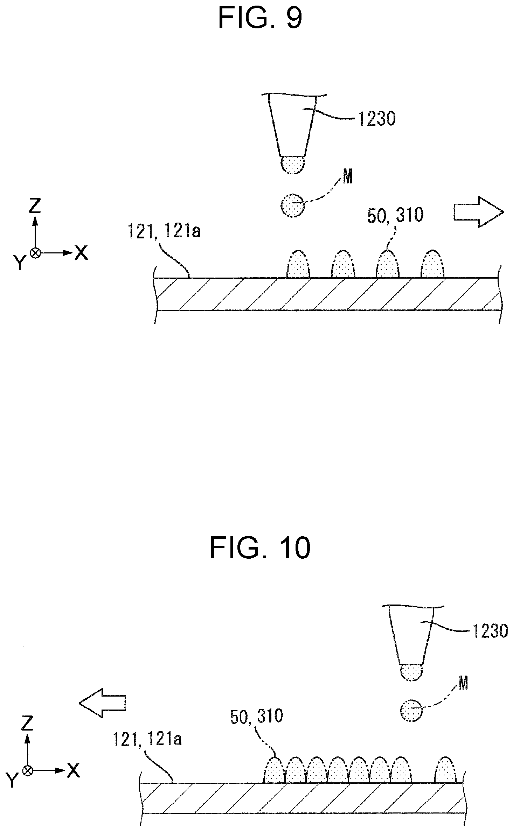

Figs. 6 to 8 are plan views schematically showing a relationship between a disposition of the head units 1400 according to the embodiment of the invention and a formed state of the constituent layer-forming portions 50. Figs. 9 and 10 are side views schematically showing a formed state of the constituent layer-forming portions 50.

In addition, when the stage 120 moves in the +X direction, the fluid material M is ejected in the form of liquid drops through the plural ejection nozzles 1230a and is disposed at predetermined positions on the forming surface 121a of the forming stage 121. As a result, the constituent layer-forming portions 50 are formed.

More specifically, first, as shown in Fig. 9, while moving the stage 120 in a +X direction, the fluid material M is disposed at regular intervals at the predetermined positions on the forming surface 121a of the forming stage 121 through the plural ejection nozzles 1230a.

Next, as shown in Fig. 10, while moving the stage 120 in a -X direction shown in Fig. 1, the fluid material M is newly disposed so as to fill gaps between ejected portions of the fluid material M disposed at regular intervals.

However, while moving the stage 120 in the +X direction, the fluid material M may be disposed through the plural ejection nozzles 1230a so as to overlap each other at predetermined positions of the forming stage 121 (so as not to form gaps) (that is, the constituent layer-forming portions 50 may be formed by the stage 120 moving to only one side in the X direction, not by the stage 120 reciprocating in the X direction).

By forming the constituent layer-forming portions 50 as described above, as shown in Fig. 6, the constituent layer-forming portions 50 (the constituent layer-forming portions 50a, 50b, 50c, and 50d) corresponding to one line in the X direction of the head units 1401, 1402, 1403, and 1404 (the first line in the Y direction) are formed.

Next, the head base 1100 moves in a -Y direction in order to form constituent layer-forming portions 50' (constituent layer-forming portions 50a', 50b', 50c', and 50d') on the second line in the Y direction of the head units 1401, 1402, 1403, and 1404. The head base 1100 moves in the Y direction by a moving amount of P/n (n represents a natural number) wherein P represents a pitch between the nozzles. In the description of the embodiment, n represents 3.

By performing the above-described operations as shown in Figs. 9 and 10, the constituent layer-forming portions 50' (constituent layer-forming portions 50a', 50b', 50c', and 50d') on the second line in the Y direction are formed as shown in Fig. 7.

Next, the head base 1100 moves in the -Y direction in order to form constituent layer-forming portions 50" (constituent layer-forming portions 50a", 50b", 50c", and 50d") on the third line in the Y direction of the head units 1401, 1402, 1403, and 1404. The head base 1100 moves in the -Y direction by a moving amount of P/3.

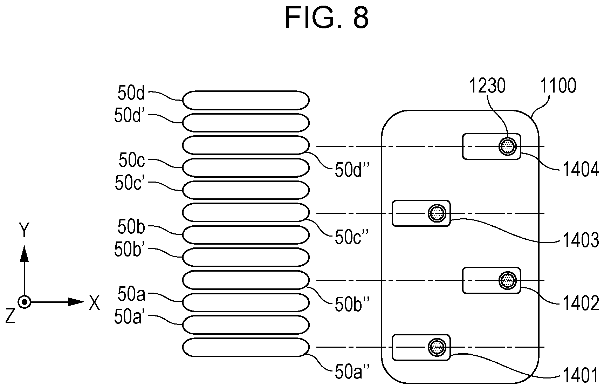

By performing the above-described operations as shown in Figs. 9 and 10, the constituent layer-forming portions 50" (constituent layer-forming portions 50a", 50b", 50c", and 50d") on the third line in the Y direction are formed as shown in Fig. 8. As a result, the constituent layer 310 corresponding to one layer in the laminating direction can be obtained. The constituent layer forming portions 50, 50', 50" may overlap.

In addition, regarding the fluid material M ejected through the constituent material ejecting portions 1230, a constituent material ejected and supplied from one unit or two or more units among the head units 1401, 1402, 1403, and 1404, may be different from a constituent material ejected and supplied from the other head units. Accordingly, by using the forming apparatus 2000 according to the embodiment, a three-dimensionally formed object formed of different materials can be formed.

In the layer 501 on the first line, as described above, the support layer 300 can be formed using the same method as described above by ejecting the support layer-forming material through the support layer-forming material ejecting portions 1730 before or after the formation of the constituent layer 310. When the layers 502, 503, ..., and 50n are formed and laminated on the layer 501, the constituent layers 310 and the support layers 300 can be formed using the same method as described above.

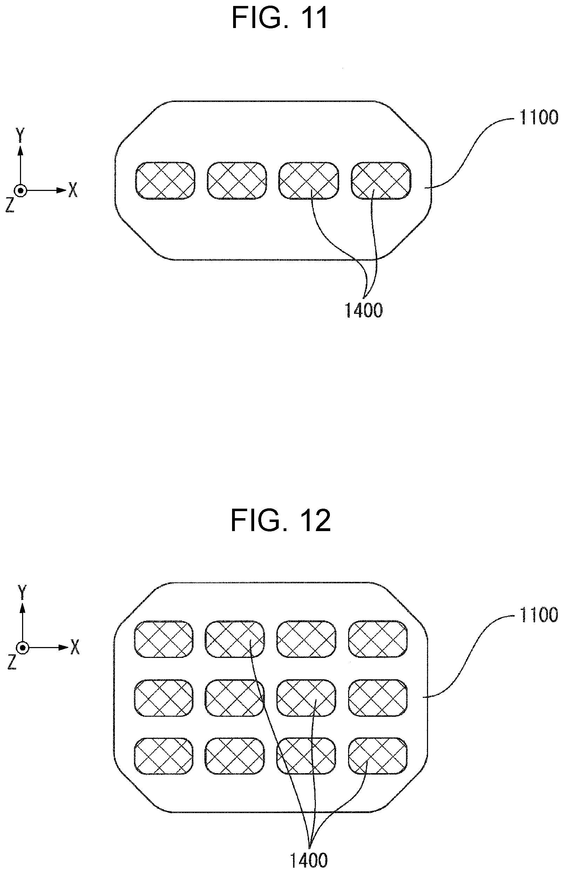

The numbers and dispositions of the head units 1400 and 1900 included in the forming apparatus 2000 according to the embodiment are not limited to the above-described numbers and dispositions. Figs. 11 and 12 are diagrams schematically showing other disposition examples of the head units 1400 disposed on the head base 1100.

Fig. 11 shows a state where the plural head units 1400 are provided in parallel in the X axis direction in the head base 1100. Fig. 12 shows a state where the plural head units 1400 are provided in a lattice shape in the head base 1100. The number of head units disposed is not limited to that of each of the examples shown in Figs. 11 and 12.

Next, an example of the procedure of forming the constituent layer-forming portions 50 using the forming apparatus 2000 according to the embodiment will be described in detail.

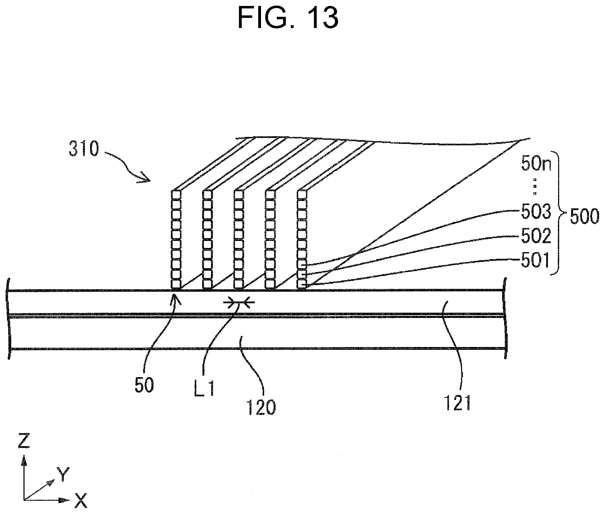

Fig. 13 is a diagram schematically showing an example of manufacturing plural laminates 500 of three-dimensionally formed objects each having a width L1 using the three-dimensionally formed object manufacturing apparatus (forming apparatus 2000) according to the embodiment of the invention.

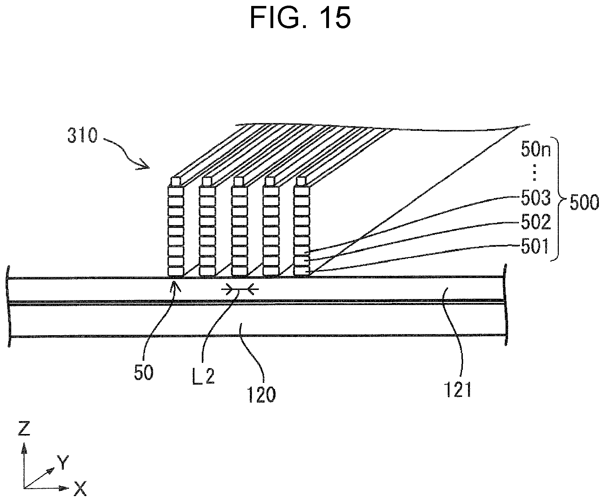

On the other hand, Fig. 15 is a diagram schematically showing an example of manufacturing three-dimensionally formed objects using a three-dimensionally formed object manufacturing apparatus of the related art. As in the case of Fig. 13, Fig. 15 shows a state where plural laminates 500 of three-dimensionally formed objects having the width L1 are being manufactured.

Figs. 13 and 15 show the examples in which only the constituent material is ejected from the constituent material ejecting portion 1230 to form the laminates 500 of three-dimensionally formed objects without the support layer-forming material being ejected from the support layer-forming material ejecting portion 1730, although of course the support layer-forming material may also be ejected.

The forming apparatus 2000 according to the embodiment has the structure shown in Figs. 1 to 4.

Specifically, the forming apparatus 2000 according to the embodiment includes: the constituent material ejecting portion 1230 as an ejecting portion that ejects a fluid material M including particles, which form a constituent material of a three-dimensionally formed object, and a solvent; the stage 120 (forming stage 121) on which a layer (layers 501, 502, 503, ..., and 50n) of the fluid material M, which is ejected from the constituent material ejecting portion 1230, is laminated; the camera 830 that obtains an image of the layer formed of the fluid material M formed on the stage 120; and the infrared heater 800 that volatilizes the solvent included in the fluid material M in the stage 120.

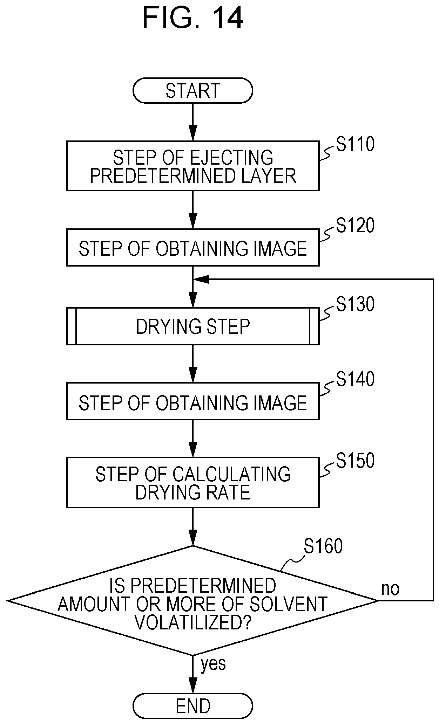

Here, the control unit 400 as a determination portion can determine whether or not a predetermined amount or more of the solvent is volatilized based on the image obtained by the camera 830. Although the details will be described below with reference to Fig. 14, the control unit 400 determines whether or not the predetermined amount or more of the solvent is volatilized per formation of a predetermined layer (for example, per formation of one layer) in the laminating direction (Z direction) of the fluid material M. After the control unit 400 determines that the predetermined amount or more of the solvent is volatilized, a next layer formed of the fluid material M is laminated (a next layer is formed in the laminating direction). The meaning of "per formation of a predetermined layer" includes not only formation of one layer but also formation of plural layers.

In general, the color of the fluid material M constituting the three-dimensionally formed object changes during drying. Therefore, for example, whether or not the predetermined amount or more of the solvent is volatilized can be determined based on a change in the color of the image per formation of the predetermined layer. Thus, in the forming apparatus 2000 according to the embodiment, when the layers of the fluid material M are laminated, a lower layer is dried and thus can be suppressed from horizontally spreading as shown in Fig. 13 showing the state in which the plural laminates 500 of three-dimensionally formed objects having the width L1 as the desired width are formed. Therefore, in the forming apparatus 2000 according to the embodiment, when the fluid material M constituting a three-dimensionally formed object is laminated, deformation of the laminate 500 of the fluid material M can be suppressed. The meaning of "change in color" includes not only a change in hue but also a change in brightness.

This determination is based on the fact that the color of the fluid material M including particles, which form a constituent material of a three-dimensionally formed object, and a solvent tends to change as the solvent is volatilized. Therefore, a volatilization rate of the solvent can be determined by obtaining an image of the layer formed of the fluid material M and observing a change in the color of the fluid material M from the image. In a case where a new layer is formed on the layer formed of the fluid material M formed on the stage 120, whether or not the lower layer is deformed can be determined based on the volatilization rate of the solvent.

In other words, in the forming apparatus 2000 according to the embodiment, the control unit 400 determines whether or not the predetermined amount or more of the solvent is volatilized based on a change in the color of the image. As a result, when the fluid material M constituting a three-dimensionally formed object is laminated, deformation of the laminate 500 of the fluid material M can be suppressed.

A method of determining a change in the color of the layer formed of the fluid material M formed on the stage 120 is not particularly limited as long as the change can be determined based on the obtained image of the layer. For example, the change can be determined by converting the color of the layer formed of the fluid material M into a gray scale value and determining whether or not the gray scale value exceeds a predetermined value. Here, examples of a method of the conversion into a gray scale value include a method of expressing each of a red component, a blue component, and a green component of the obtained image in 256 levels and obtaining a root mean square value thereof.

In addition, by obtaining an image of the layer formed of the fluid material M and observing a change in the color of the fluid material M from the image as described above, a subtle change in color (that is, a subtle change in volatilization rate) which can be recognized by visual inspection can be accurately determined.

On the other hand, in a three-dimensionally formed object manufacturing apparatus of the related art, the layer formed of the fluid material M is laminated without determining whether or not the predetermined amount or more of the solvent is volatilized. Therefore, even in a case where it is attempted to form the plural laminates 500 of three-dimensionally formed objects having a desired width L1 using the three-dimensionally formed object manufacturing apparatus of the related art, when the layer formed of the fluid material M is laminated, a lower layer other than the uppermost layer horizontally spreads due to the weight of a layer which is formed above the lower layer, and the lower layer is formed to have a width L2 more than the desired width L1 as shown in Fig. 15. Accordingly, when the fluid material M constituting a three-dimensionally formed object is laminated, the laminate 500 of the fluid material M is deformed.

In addition, in the forming apparatus 2000 according to the embodiment, as shown in Figs. 1 and 3, the control unit 400 includes a storage portion 820 that stores information sent from at least one of ROM, HDD, EEPROM, or the like. The storage portion 820 stores, as one kind of the information, a corresponding parameter between the volatilization rate of the solvent included in the fluid material M and the viscosity of the fluid material M. The control unit 400 can determine whether or not the predetermined amount or more of the solvent is volatilized based on a volatilization rate corresponding to a predetermined viscosity of the fluid material M which is calculated using the corresponding parameter.

Here, the accuracy (for example, regarding deformation of the laminate 500 of the fluid material M caused when the lower layer horizontally spreads due to the weight of the fluid material M) required during the manufacturing of a three-dimensionally formed object has a high correlation with the viscosity of the fluid material M. Therefore, in the forming apparatus 2000 according to the embodiment, when the fluid material M constituting a three-dimensionally formed object is laminated, deformation of the laminate 500 of the fluid material can be more effectively suppressed.

However, the invention is not limited to the above-described configuration. Instead of using the corresponding parameter between the volatilization rate of the solvent and the viscosity of the fluid material, for example, a correlation between the volatilization rate of the solvent and the particle density per unit volume, a correlation between the volatilization rate of the solvent and the volume of the laminate, or a correlation between the volatilization rate of the solvent and the hue of the image may be used.

In addition, as described above, the forming apparatus 2000 according to the embodiment includes the infrared heater 800 as the drying portion. This way, a heating portion or a blowing portion is used as the drying portion. That is, the drying portion includes at least one of a heating portion or a blowing portion. As a result, the drying portion can be simply configured.

Here, the output of the infrared heater 800 according to the embodiment is variable depending on the volatilization rate of the solvent included in the fluid material M under the control of the control unit 400. Therefore, based on, for example, whether or not the solvent is easily volatilized or the size of a three-dimensionally formed object to be manufactured, the degree of dryness can be adjusted depending on whether the volatilization rate of the solvent is high or low (the volatilization speed is fast or slow).

Here, the degree of dryness can be adjusted, for example, by adjusting the output value (power) of the infrared heater 800, by adjusting the drying time (output time), by adjusting the distance between the infrared heater 800 and the laminate 500 of the fluid material M, or by adjusting the number of drying portions that operates among plural drying portions (infrared heaters 800).

In addition, in the infrared heater 800 according to the embodiment, the irradiation range of infrared light can be narrowed, and the irradiation position of infrared light is variable. In other words, in the infrared heater 800 as the drying portion according to the embodiment, the output is partially variable depending on a volatilization rate of the solvent in a part of the layer formed of the fluid material M based on the image obtained by the camera 830. Therefore, the output can be adjusted to be higher in a portion where the volatilization rate of the solvent is low than a portion where the volatilization rate of the solvent is high based on the image obtained by the camera 830. That is, the forming apparatus 2000 according to the embodiment is configured such that there is no partial unevenness in volatilization rate in the layer formed of the fluid material M formed on the stage 120.

Next, an example of the method of manufacturing a three-dimensionally formed object using the forming apparatus 2000 will be described using a flowchart.

Here, Fig. 14 is a flowchart showing a method of manufacturing a three-dimensionally formed object according to an example of the invention, the flowchart corresponding to the formation of the predetermined layer (for example, one layer) in the process of laminating plural layers in the laminating direction (Z direction) to form the laminate 500 of three-dimensionally formed objects. Therefore, in order to complete the laminate 500 of three-dimensionally formed objects, optionally, the flow shown in Fig. 14 is repeated.

As shown in Fig. 14, in the method of manufacturing a three-dimensionally formed object according to the example, once the method of manufacturing a three-dimensionally formed object starts by obtaining data of a three-dimensionally formed object, an ejecting step S110 is initially performed. In the ejecting step S110, while moving the stage 120, the fluid material M is ejected from the constituent material ejecting portion 1230 (in some cases, also from the support layer-forming material ejecting portion 1730) to form the predetermined layer portion (for example, one layer 501) of the laminate 500 of three-dimensionally formed objects.

Next, in an obtaining step S120, an image of the stage 120 is obtained (taken) by the camera 830. This step corresponds to obtaining an image showing a state immediately after the layer formed of the fluid material M corresponding to the predetermined layer is formed on the stage 120 (forming stage 121).

In this step, whether or not a predetermined amount of the fluid material M is ejected from the constituent material ejecting portion 1230 can be determined. Specifically, an image estimated from the data of the three-dimensionally formed object is compared to the image obtained in this step. Based on a difference between the images, whether or not the predetermined amount of the fluid material M is ejected from the constituent material ejecting portion 1230 (whether or not there is a difference between the images) can be determined. In a case where it is determined that the predetermined amount of the fluid material M is not ejected from the constituent material ejecting portion 1230 (in a case where there is a difference between the images, that is, for example, in a case where the layer corresponding to the laminate 500 is not present in the obtained image), the method of manufacturing a three-dimensionally formed object according to the example may end.

Next, in a drying step S130, the predetermined layer formed of the fluid material M formed on the stage 120 is dried by the infrared heater 800 under predetermined drying conditions. The drying step may be performed while automatically varying the output depending on the volatilization rate (volatilization speed) of the solvent included in the fluid material M under the control of the control unit 400, or may be performed under output conditions set by the user.

Next, in an obtaining step S140, an image of the stage 120 is obtained by the camera 830. This step corresponds to obtaining an image in order to calculate the drying rate of the fluid material M corresponding to the predetermined layer formed on the stage 120 (forming stage 121), or different areas of the predetermined layer.

Next, in a calculating step S150, the drying rate of the fluid material M is calculated based on the result of the image obtained in Step S430. Specifically, the color image (in which each of a red component, a blue component, and a green component is expressed in 256 levels) obtained in Step S140 is converted into a gray scale value (a root mean square value of the red component, the blue component, and the green component is calculated). Again, this can be done for different areas.

In a determining step S160, whether or not a predetermined amount or more of the solvent included in the fluid material M is volatilized is determined (the calculated gray scale value is compared to a predetermined threshold). Again, this can be done for different areas.

Here, in a case where it is determined that the predetermined amount or more of the solvent is volatilized (the gray scale value exceeds the threshold), the flow of the method of manufacturing a three-dimensionally formed object according to the example ends (optionally, the flow shown in Fig. 14 is repeated until the next layer corresponding to the predetermined layer is formed).

On the other hand, in a case where it is determined that the predetermined amount or more of the solvent is not volatilized, the process returns to the drying step S130, and the solvent included in the fluid material M is further volatilized. Again, this can be done for different areas.

The threshold for determining whether or not the predetermined amount or more of the solvent is volatilized can be set based on, for example, the corresponding parameter between the volatilization rate of the solvent included in the fluid material M and the viscosity of the fluid material M (whether or not the volatilization rate reaches a predetermined volatilization rate corresponding to a predetermined viscosity).

As described above, in the method of manufacturing a three-dimensionally formed object according to the example, the three-dimensionally formed object is manufactured by laminating layers.

The method of manufacturing a three-dimensionally formed object according to the example includes: ejecting (Step S110) a layer formed of the fluid material M including particles, which form a constituent material of a three-dimensionally formed object, and a solvent to the stage 120 until the predetermined layer (for example, one layer) is formed in the laminating direction of the layer formed of the fluid material M; volatilizing (Step S130) the solvent included in the fluid material M of the stage 120; obtaining (Step S140) an image of the layer formed of the fluid material M formed on the stage 120; determining (Steps S150 and S160) whether or not a predetermined amount or more of the solvent is volatilized based on the obtained image; and laminating a next layer formed of the fluid material (optionally repeating the flow shown in Fig. 14) after it is determined that the predetermined amount or more of the solvent is volatilized per formation of the predetermined layer.

Therefore, in the method of manufacturing a three-dimensionally formed object according to the example, when the layers of the fluid material M are laminated, a lower layer is dried and thus can be prevented from horizontally spreading. Therefore, in the method of manufacturing a three-dimensionally formed object according to the example, when the fluid material M constituting a three-dimensionally formed object is laminated, deformation of the laminate of the fluid material can be suppressed.

The invention is not limited to the above-described examples and can be realized in various embodiments within a range not departing from the scope of the invention as defined by the claims. For example, the technical features of any one of the examples corresponding to the technical features of any one of the embodiments described in "Summary" can be appropriately replaced or combined in order to solve a part or all of the above-described problems or to achieve a part or all of the above-described effects. In addition, the technical features may be appropriately omitted unless they are described as essential features in this specification.

## Claims

1. A three-dimensionally formed object manufacturing apparatus (2000) comprising:
an ejecting portion (1400) configured to eject a fluid material including particles, which can form a constituent material of a three-dimensionally formed object, and a solvent;
a stage (120) on which a layer (501) formed of the fluid material, which is ejected from the ejecting portion, can be laminated; a drying portion (800) configured to volatilize the solvent included in the fluid material of the stage; **characterized by**
an obtaining portion (830) configured to obtain an image of the layer formed of the fluid material formed on the stage; and
a determination portion (400) configured to determine whether or not a predetermined amount or more of the solvent is volatilized based on the image obtained by the obtaining portion,
the apparatus configured such that a next layer (502) formed of the fluid material is laminated after the determination portion determines that the predetermined amount or more of the solvent is volatilized per formation of a predetermined layer in a laminating direction of the layer formed of the fluid material.

2. The three-dimensionally formed object manufacturing apparatus according to Claim 1, further comprising:
a storage portion (820) that stores a corresponding parameter between a volatilization rate of the solvent and a viscosity of the fluid material,
wherein the determination portion is configured to determine whether or not the predetermined amount or more of the solvent is volatilized based on a volatilization rate corresponding to a predetermined viscosity of the fluid material which is calculated using the corresponding parameter.

3. The three-dimensionally formed object manufacturing apparatus according to Claim 1 or Claim 2, wherein the drying portion includes at least one of a heating portion or a blowing portion.

4. The three-dimensionally formed object manufacturing apparatus according to any one of the preceding claims,
wherein an output of the drying portion is variable depending on the volatilization rate of the solvent.

5. The three-dimensionally formed object manufacturing apparatus according to Claim 4,
wherein the output of the drying portion is partially variable depending on a volatilization rate of the solvent in a part of the layer formed of the fluid material based on the image obtained by the obtaining portion.

6. The three-dimensionally formed object manufacturing apparatus according to any one of the preceding claims,
wherein the determination portion is configured to determine whether or not the predetermined amount or more of the solvent is volatilized based on a change in a color of the image obtained by the obtaining portion.

7. A method of manufacturing a three-dimensionally formed object (500) by laminating layers, the method comprising:
(S110) ejecting a layer (501) formed of a fluid material including particles, which form a constituent material of a three-dimensionally formed object, and a solvent to a stage (120) until a predetermined layer is formed in a laminating direction of the layer formed of the fluid material;
(S130) volatilizing the solvent included in the fluid material of the stage; **characterized by** (S140) obtaining an image of the layer formed of the fluid material formed on the stage;
(S150, S160) determining whether or not a predetermined amount or more of the solvent is volatilized based on the obtained image; and
(S110) laminating a next layer (502) formed of the fluid material after it is determined that the predetermined amount or more of the solvent is volatilized per formation of the predetermined layer.

## Patentansprüche

1. Vorrichtung (2000) zur Herstellung eines dreidimensional geformten Objekts, umfassend:
einen Ausstoßabschnitt (1400), der konfiguriert ist, ein Fluidmaterial auszustoßen, das Partikel, die einen Werkstoff eines dreidimensional geformten Objekts bilden können, und ein Lösemittel enthält;
eine Plattform (120) auf der eine Schicht (501), die aus dem Fluidmaterial gebildet ist, das aus dem Ausstoßabschnitt ausgestoßen wird, laminiert werden kann;
einen Trocknungsabschnitt (800), der konfiguriert ist, das Lösemittel zu verflüchtigen, das im Fluidmaterial der Plattform enthalten ist; **gekennzeichnet durch**
einen Erhaltungsabschnitt (830), der konfiguriert ist, ein Bild der Schicht zu erhalten, die aus dem Fluidmaterial gebildet ist, das auf der Plattform gebildet ist; und
einen Bestimmungsabschnitt (400), der konfiguriert ist, basierend auf dem Bild, das durch den Erhaltungsabschnitt erhalten wird, zu bestimmen, ob eine vorbestimmte Menge oder mehr des Lösemittels verflüchtigt ist oder nicht,
die Vorrichtung so konfiguriert ist, dass eine nächste Schicht (502), die aus dem Fluidmaterial gebildet ist, laminiert wird, nachdem der Bestimmungsabschnitt bestimmt hat, dass die vorbestimmte Menge oder mehr des Lösemittels durch Bilden einer vorbestimmten Schicht in einer Laminierungsrichtung der Schicht, die aus dem Fluidmaterial gebildet ist, verflüchtigt ist.

2. Vorrichtung zur Herstellung eines dreidimensional geformten Objekts nach Anspruch 1, ferner umfassend:
einen Speicherabschnitt (820), der einen entsprechenden Parameter zwischen einer Verflüchtigungsrate des Lösemittels und einer Viskosität des Fluidmaterials speichert,
wobei der Bestimmungsabschnitt konfiguriert ist, basierend auf einer Verflüchtigungsrate entsprechend einer vorbestimmten Viskosität des Fluidmaterials, die unter Verwendung des entsprechenden Parameters berechnet wird, zu bestimmen, ob die vorbestimmte Menge oder mehr des Lösemittels verflüchtigt ist oder nicht.

3. Vorrichtung zur Herstellung eines dreidimensional geformten Objekts nach Anspruch 1 oder Anspruch 2,
wobei der Trocknungsabschnitt mindestens eines von einem Heizabschnitt oder einem Gebläseabschnitt enthält.

4. Vorrichtung zur Herstellung eines dreidimensional geformten Objekts nach einem der vorangehenden Ansprüche,
wobei ein Ausgang des Trocknungsabschnitts abhängig von der Verflüchtigungsrate des Lösemittels variabel ist.

5. Vorrichtung zur Herstellung eines dreidimensional geformten Objekts nach Anspruch 4,
wobei der Ausgang des Trocknungsabschnitts teilweise abhängig von einer Verflüchtigungsrate des Lösemittels in einem Teil der Schicht, die aus dem Fluidmaterial gebildet ist, basierend auf dem Bild, das durch den Erhaltungsabschnitt erhalten wird, variabel ist.

6. Vorrichtung zur Herstellung eines dreidimensional geformten Objekts nach einem der vorangehenden Ansprüche,
wobei der Bestimmungsabschnitt konfiguriert ist, basierend auf einer Änderung in einer Farbe des Bilds, das durch den Erhaltungsabschnitt erhalten wird, zu bestimmen, ob die vorbestimmte Menge oder mehr des Lösemittels verflüchtigt ist oder nicht.

7. Verfahren zur Herstellung eines dreidimensional geformten Objekts (500) durch Laminieren von Schichten, das Verfahren umfassend:
(S110) Ausstoßen einer Schicht (501), die aus einem Fluidmaterial gebildet ist, das Partikel, die einen Werkstoff eines dreidimensional geformten Objekts bilden können, und ein Lösemittel enthält, auf eine Plattform (120), bis eine vorbestimmte Schicht in einer Laminierungsrichtung der Schicht gebildet ist, die aus dem Fluidmaterial gebildet ist;
(S130) Verflüchtigen des Lösemittels, das im Fluidmaterial der Plattform enthalten ist; **gekennzeichnet durch**
(S140) Erhalten eines Bildes der Schicht, die aus dem Fluidmaterial gebildet ist, das auf der Plattform gebildet ist; und
(S150, S160) Bestimmen basierend auf dem erhaltenen Bild, ob eine vorbestimmte Menge oder mehr des Lösemittels verflüchtigt ist oder nicht; und
(S110) Laminieren einer nächsten Schicht (502), die aus dem Fluidmaterial gebildet ist, nachdem bestimmt worden ist, dass die vorbestimmte Menge oder mehr des Lösemittels durch Bilden der vorbestimmten Schicht verflüchtigt ist.

## Revendications

1. Appareil de fabrication d'objets formés en trois dimensions (2000) comprenant :
une partie d'éjection (1400) configurée pour éjecter un matériau fluide comprenant des particules, lequel peut former un matériau constitutif d'un objet formé en trois dimensions, et un solvant ;
une platine (120) sur laquelle une couche (501) formée par le matériau fluide, lequel est éjecté par la partie d'éjection, peut être laminée ;
une partie de séchage (800) configurée pour faire se volatiliser le solvant compris dans le matériau fluide de la platine ; **caractérisé par**
une partie d'obtention (830) configurée pour obtenir une image de la couche formée par le matériau fluide formé sur la platine ; et
une partie de détermination (400) configurée pour déterminer si, oui ou non, une quantité prédéterminée ou plus du solvant s'est volatilisée sur la base de l'image obtenue par la partie d'obtention,
l'appareil étant configuré de telle sorte qu'une couche suivante (502) formée par le matériau fluide est laminée après que la partie de détermination détermine que la quantité prédéterminée ou plus du solvant s'est volatilisée par formation d'une couche prédéterminée dans une direction de laminage de la couche formée par le matériau fluide.

2. Appareil de fabrication d'objets formés en trois dimensions selon la revendication 1, comprenant en outre :
une partie de stockage (820) qui stocke un paramètre correspondant entre un taux de volatilisation du solvant et une viscosité du matériau fluide,
dans lequel la partie de détermination est configurée pour déterminer si, oui ou non, la quantité prédéterminée ou plus du solvant s'est volatilisée sur la base d'un taux de volatilisation correspondant à une viscosité prédéterminée du matériau fluide qui est calculé en utilisant le paramètre correspondant.

3. Appareil de fabrication d'objets formés en trois dimensions selon la revendication 1 ou la revendication 2,
dans lequel la partie de séchage comprend au moins l'une parmi une partie de chauffage ou une partie de soufflage.

4. Appareil de fabrication d'objets formés en trois dimensions selon l'une quelconque des revendications précédentes,
dans lequel une puissance de la partie de séchage est variable en fonction du taux de volatilisation du solvant.

5. Appareil de fabrication d'objets formés en trois dimensions selon la revendication 4,
dans lequel la puissance de la partie de séchage est partiellement variable en fonction d'un taux de volatilisation du solvant dans une partie de la couche formée par le matériau fluide sur la base de l'image obtenue par la partie d'obtention.

6. Appareil de fabrication d'objets formés en trois dimensions selon l'une quelconque des revendications précédentes,
dans lequel la partie de détermination est configurée pour déterminer si, oui ou non, la quantité prédéterminée ou plus du solvant s'est volatilisée sur la base d'un changement d'une couleur de l'image obtenue par la partie d'obtention.

7. Procédé de fabrication d'un objet formé en trois dimensions (500) en laminant des couches, le procédé comprenant :
(S110) l'éjection d'une couche (501) formée par un matériau fluide comprenant des particules, lesquelles forment un matériau constitutif d'un objet formé en trois dimensions, et un solvant sur une platine (120) jusqu'à ce qu'une couche prédéterminée soit formée dans une direction de laminage de la couche formée par le matériau fluide ;
(S130) la volatilisation du solvant compris dans le matériau fluide de la platine ;
**caractérisé par**
(S140) l'obtention d'une image de la couche formée par le matériau fluide formé sur la platine ;
(S150, S160) la détermination si, oui ou non, une quantité prédéterminée ou plus du solvant s'est volatilisée sur la base de l'image obtenue ; et
(S110) le laminage d'une couche suivante (502) formée par le matériau fluide après qu'il soit déterminé que la quantité prédéterminée ou plus du solvant s'est volatilisée par formation de la couche prédéterminée.
